# EUROPEAN PATENT APPLICATION

(11) **EP 3 097 971 A1**
(43) Date of publication of application: **30.11.2016**
(21) Application number: 16170149.5
(22) Date of filing: 18.05.2016
(51) Int. Cl.: B01D 53/26, F28D 9/00

(54) **IMPROVED COMPRESSED GAS DRYER**

(30) Priority: 25.05.2015 IT UB20150653
(71) Applicant: Parker Hannifin Manufacturing S.r.l., 20094 Corsico (MI) (IT)
(72) Inventor: FAVERO, Chiara, 35010 Perarolo di Vigonza (PD) (IT); POLENTA, Mario, 30032 Fiesso d Artico (IT)
(74) Representative: Gonella, Mario

(57) **Abstract**

An improved compressed gas dryer (10) is described, the compressed gas dryer comprising, within a containment body (11) having an inlet (12) and an outlet (13),
- cooling means (17) for a gas entering through said inlet (12);
- a condensate separator (18) interposed between said gas cooling means (17) and said outlet (13),
said improved dryer being characterized in that said condensate separator (18) is provided with a demister (19) having a horizontal plane of arrangement in the configuration for use.

## Description

. The object of the present invention is an improved compressed gas dryer.

. Nowadays, compressed gas dryers, designed to extract as much moisture as possible from a flow of gas under pressure, for example a stream of compressed air, are widely known and applied.

. These compressed gas dryers generally comprise, within a containment body provided with an inlet and an outlet,
- gas/gas heat exchange means between a gas entering through the inlet of the dryer and the same gas flowing out of the dryer toward the outlet, inside which are defined an intake path for the gas that enters through said inlet and a discharge path for the gas that exits from the dryer toward said outlet;
- cooling means for the gas flowing out from the inflow path of the gas/gas heat exchange means, consisting generally of a refrigerating circuit wherein the evaporator is designed to cool the flow of compressed gas to the dew point;
- a condensate separator interposed between said gas cooling means and the outlet path from said gas/gas heat exchange means, suitable to physically separate the condensate and to allow the compressed gas to pass through.

. A condensate separator is generally defined by a plate-shaped element, known in the art as "demister", consisting of a grid with a mesh whereon the drops of condensation fall, while the perforations allow the passage of the gas flow under pressure.

. Although these prior art compressed gas dryers are widespread, they display some characteristics that leave room for improvements.

. A first one of such characteristics is tied to the fact that generally the demister is positioned in a substantially vertical arrangement in its configuration for use.

. In this arrangement, the captured condensate flows downward by gravity through said demister and thus prevents the grid to be optimally receptive at any time, since one part of the collected condensate prevents the grid from holding more drops of condensate, or the excessive accumulation of condensate can determine an entrainment of the condensate past the demister by the gas under pressure flowing through said demister.

. Therefore, the vertical arrangement for the demister does not guarantee the optimal efficiency of the same.

. In addition, in the dryers of known type the condensate separation chamber within which the demister is positioned is shaped, for reasons of size, in such a way that the flow of compressed gas coming out from the cooling means is diverted so as to only partially cross the demister in a perpendicular direction and through a path having a cross section with relatively small dimensions, which implies a high speed of the gas; this event can cause the entrainment of the condensate beyond the demister.

.On the contrary, in the areas in which the flow of gas encounters the demister in diagonal directions, the same flow is partially diverted without crossing the demister, giving rise to the formation of areas of gas recirculation that restrict the effectively useful surface of the demister.

.In addition, where the compressed gas flows through the demister in a direction that is not perpendicular, there is the occurrence of undesirable pressure drops.

.The objective of the present invention is to provide an improved compressed gas dryer, capable of solving the already mentioned drawbacks of the prior art dryers.

.In the scope of this objective, one purpose of the invention is to realize an improved dryer that is more efficient in terms of condensation separation.

.Another purpose of the invention is to realize an improved dryer having a condensate separator made so as to minimize pressure drops.

.A further purpose of the invention is to realize an improved dryer having more compact dimensions compared to an equivalent compressed gas dryer of known type.

.This objective, as well as these and other purposes that will become more evident later, are achieved by an improved compressed gas dryer of the type comprising, within a containment body provided with an inlet and an outlet:
- cooling means for a gas entering through said inlet;
- a condensate separator interposed between said gas cooling means and said outlet;
said improved dryer being characterized in that said condensate separator has a demister having a horizontal plane of arrangement in the configuration for use.

.Further characteristics and advantages of the invention will be more evident from the description of three preferred, but not exclusive, embodiments of the improved dryer according to the invention given by way of non-limiting example, with reference to the accompanying drawings, wherein:
- figure 1 illustrates a lateral cross-sectional view of a first embodiment of an improved dryer according to the invention;
- figure 2 is the same view as figure 1 in a first step of operation of the dryer according to the invention;
- figure 3 is the same view as figures 1 and 2 in a second step of operation of the dryer according to the invention;

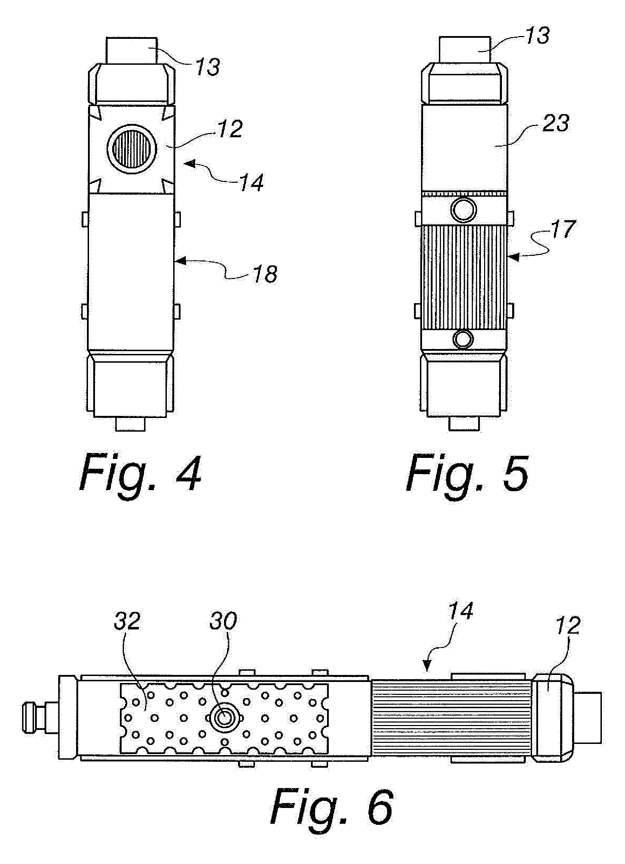

- figure 4 is a rear view of the improved dryer according to the invention;
- figure 5 is a front view of the improved dryer according to the invention;
- figure 6 is a view from below of the improved dryer according to the invention;
- figure 7 is a view in longitudinal cross section of a portion of the gas/gas heat exchange means of the dryer according to the invention;
- figure 8 is a view in longitudinal cross section of another portion of the gas/gas heat exchange means of the dryer according to the invention;
- figure 9 is a view in longitudinal cross section of a portion of the cooling means of the dryer according to the invention;
- figure 10 is a view in longitudinal cross section of another portion of the cooling means of the dryer according to the invention;
- figure 11 is a schematic perspective view of the gas/gas heat exchange means of the dryer according to the invention;
- figure 12 is a schematic perspective view of the cooling means of the dryer according to the invention;
- figure 13 illustrates schematically a second embodiment of the improved dryer according to the invention;
- figure 14 illustrates schematically a third embodiment of the improved dryer according to the invention.

.With reference to said figures, a first embodiment of an improved compressed air dryer is generally indicated with the reference number 10.

.This improved compressed air dryer 10 is of the type comprising, inside a containment body 11 provided with an inlet 12 and an outlet 13:
- cooling means 17 for a gas entering through said inlet 12;
- a condensate separator 18 interposed between said gas cooling means 17 and said outlet 13.

.Said improved dryer 10 is characterized in that said condensate separator 18 is provided with a demister 19 having a horizontal plane of arrangement in the configuration for use.

.In this first embodiment of the invention, intended as a non-limiting example, the improved compressed air dryer 10 also comprises gas/gas heat exchange means 14 within which are defined:
- an intake path 15 for the gas entering from a corresponding inlet 12a of said gas/gas heat exchange means 14 and adapted to direct the incoming gas toward said inlet 12 that is open toward the cooling means 17;
- a discharge path 16 for the gas flowing out through said outlet 13 from said condensate separator 18 toward an outlet 13a of said gas/gas heat exchange means 14.

.The demister 19 is positioned inside a separation chamber 20.

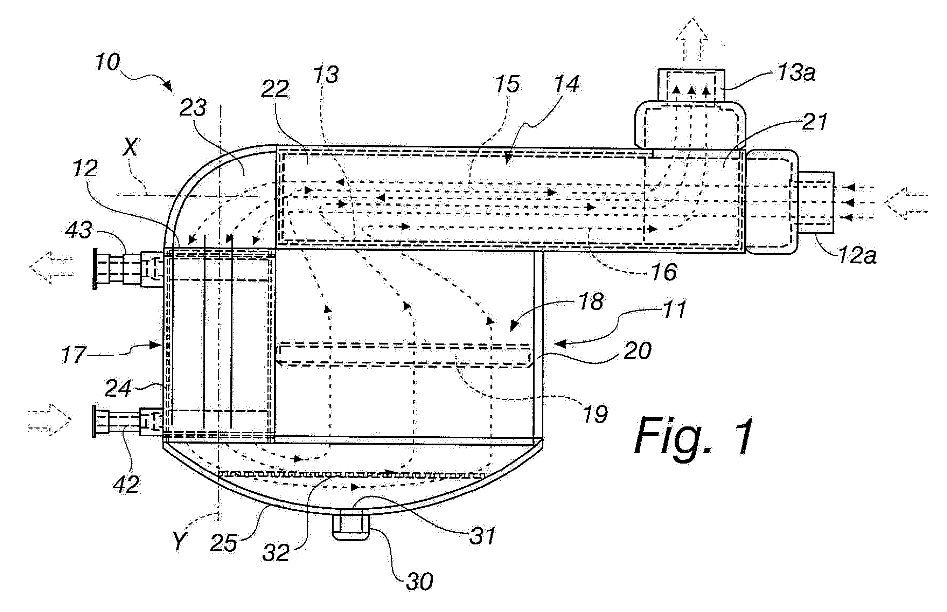

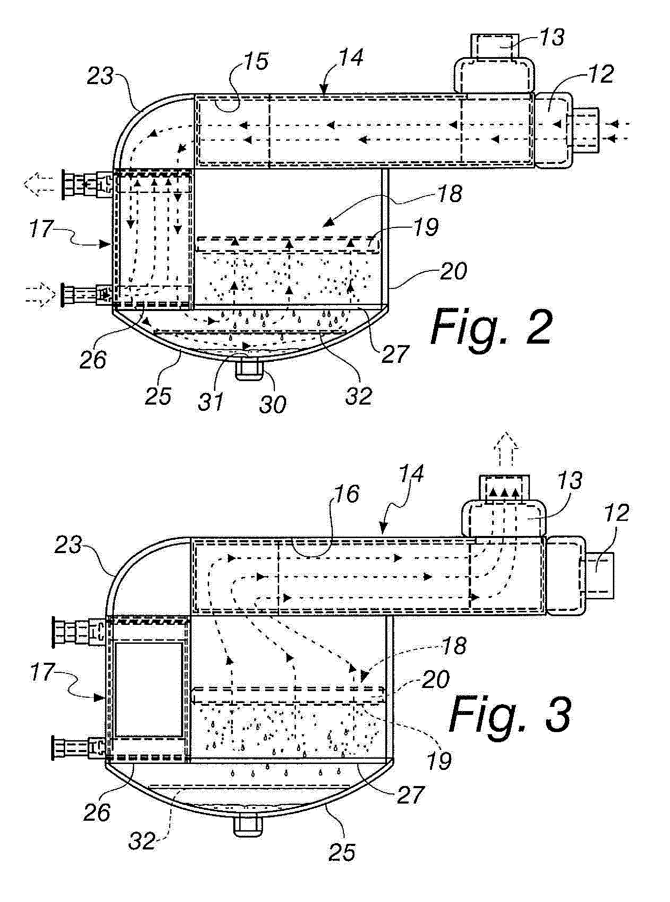

.In particular, the separation chamber 20 of the condensate separator 18, within which is horizontally arranged the demister 19, is shaped in such a way that the flow of gas being discharged from the cooling means 17 is directed to impinge against the demister 19 following a direction substantially perpendicular to the same, as schematically shown in figures 1 and 2.

.In the embodiment of the improved dryer 10 according to the invention described here by way of non-limiting example, the improved dryer 10 according to the invention is provided with the gas/gas heat exchange means 14 that essentially extend in a horizontal direction X in the configuration for use, with the inlets 12a and outlets 13a arranged at a first end thereof 21, while at the opposite end 22 is defined a sharp bend 23 that is adapted to divert the flow of gas toward the inlet 12 that opens onto the cooling means 17, which essentially extend in a vertical direction Y inside a cooling chamber 24.

.The separation chamber 20 is arranged laterally adjacent to the cooling chamber 24 in the direction X and extends essentially in the same direction X.

.Below the cooling chamber 24 and the separation chamber 20 is arranged a curved bottom 25 shaped so as to divert the flow of cooled gas toward the separation chamber 20.

.The length of the separation chamber 20 in the X direction is such as to allow the flow of gas diverted by the curved bottom 25 to encounter the horizontal demister 19 following a direction substantially perpendicular thereto.

.The demister 19 extends in length in the direction X substantially through all the length of the separation chamber itself 20.

.The shape of the curved bottom 25, the shape of the separation chamber, and the position and dimensions of said demister 19 are such that the demister 19 is crossed at right angles with respect to its plane of arrangement along its entire length.

.Moreover, the cross section of the outlet 26 from the cooling chamber is smaller than the cross section of the inlet 27 of the separation chamber 20, therefore the stream of gas is abruptly slowed down in the passage from one to the other.

.This slowing down causes the compressed gas to flow through the demister 19 at such a speed as to avoid the entrainment of the condensate beyond the demister 19.

.The peculiar arrangement of the demister 19, arranged on a horizontal plane, determines the drop-by-drop downflow by gravity of the condensate collected on the demister; in this manner, the demister 19 is emptied of the collected condensate and thus it is optimally ready to receive new condensate.

.On the whole, said peculiarities considerably increase the efficiency of the condensation chamber 20 and the process of separating the condensate from the gas in general.

.The curved bottom 25 has at its lowest point, in the configuration for use, a discharge sleeve 30 connected to an outflow through hole 31 for the liquid accumulated by gravity in the curved bottom 25.

.The curved bottom 25 is also provided with a perforated plate 32 designed to divert the flow of gas toward the separation chamber 20 and at the same time allowing the passage of the liquid trickling down from the demister 19 toward the discharge sleeve 30.

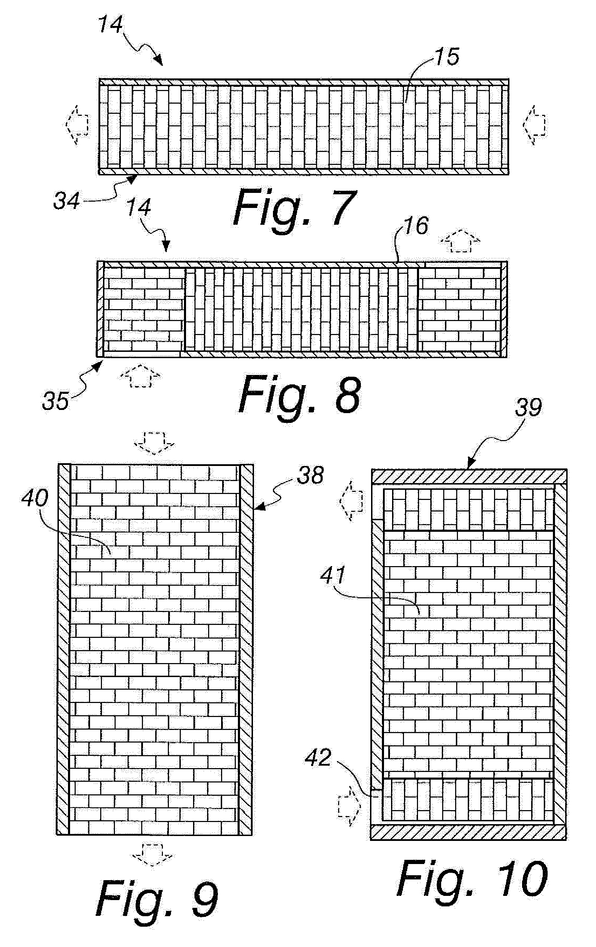

.In the present embodiment of the improved dryer 10 according to the invention, the gas/gas heat exchange means 14 comprise, as mentioned above, an intake path 15, shown schematically in figures 2 and 7, for the gas entering from said inlet 12, and a discharge path 16, shown schematically in figures 3 and 8, for the gas flowing toward said outlet 13.

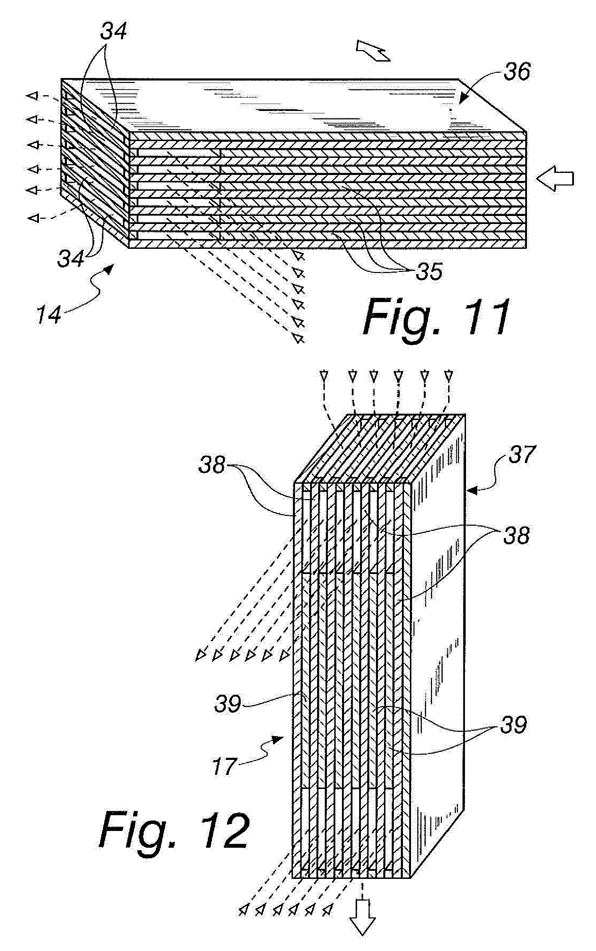

.These intake and discharge paths 15, 16 are formed by corresponding finned plates 34 and 35 alternately stacked together side by side to form a gas/gas heat exchange block 36, exemplified in figure 11.

.A schematic cross-sectional view of a first finned plate 34 of the gas/gas heat exchange means 14 is exemplified in figure 7; this first finned plate 34, enclosed between two second finned plates 35, defines a passage for the compressed gas between the inlet 12 and the sharp bend 23 that diverts the compressed gas toward the cooling means 17.

.A schematic cross-sectional view of a second finned plate 35 of the gas/gas heat exchange means 14 is exemplified in figure 8; this second finned plate 35, enclosed between two first finned plates 34, defines a passage for the gas coming from the separation chamber 20 and flowing toward the outlet 13.

.In the present embodiment of the improved dryer 10 according to the invention, the cooling means 17 for the gas flowing out of the discharge path 15 from the gas/gas heat exchange means 14 consist of the evaporator of a refrigerating cycle, not shown here for the sake of simplicity and meant to be of a known type, provided to cool down the flow of compressed gas to the dew point.

.The refrigerant gas used is for example Freon.

.Similarly to the description given for the gas/gas heat exchange means 14, the cooling means 17 consist of an evaporation block 37, exemplified in figure 12, made up of finned plates 38 and 39, arranged alternately to each other to define a path 40 for the compressed gas and a path 41 for the cooling gas, as exemplified schematically in figures 9 and 10, respectively.

.A schematic cross-section view of a first finned plate 38 of the cooling means 17 is exemplified in figure 9; this first finned plate 38, enclosed between two second finned plates 39, defines a passage for the compressed gas between the sharp bend 23, that diverts the compressed gas toward the cooling means 17, and the curved bottom 25.

.A schematic cross-sectional view of a second finned plate 39 of the cooling means 17 is exemplified in figure 10; this second finned plate 39, enclosed between two first finned plates 38, defines a passage substantially C-shaped for the cooling gas between a corresponding inlet connection 42 and a corresponding opposite outlet connection 43, connecting to a refrigerating circuit, not shown for reason of simplicity.

.The increased efficiency of the separating process makes it possible to reduce the dimensions and the capacity of the refrigerating circuit associated with the cooling means 17, with a consequent decrease of the energy demands by the improved dryer 10; in fact, the higher the efficiency of the condensate separator 18, the higher the temperature that can be set for the air discharging from the cooling means 17, that is, from the evaporator, and consequently there is a correspondingly higher evaporating pressure of the refrigerant gas.

.This makes it possible to use a refrigerating circuit of smaller capacity compared to a circuit used for a similar dryer of known type, therefore with smaller power input and more compact dimensions.

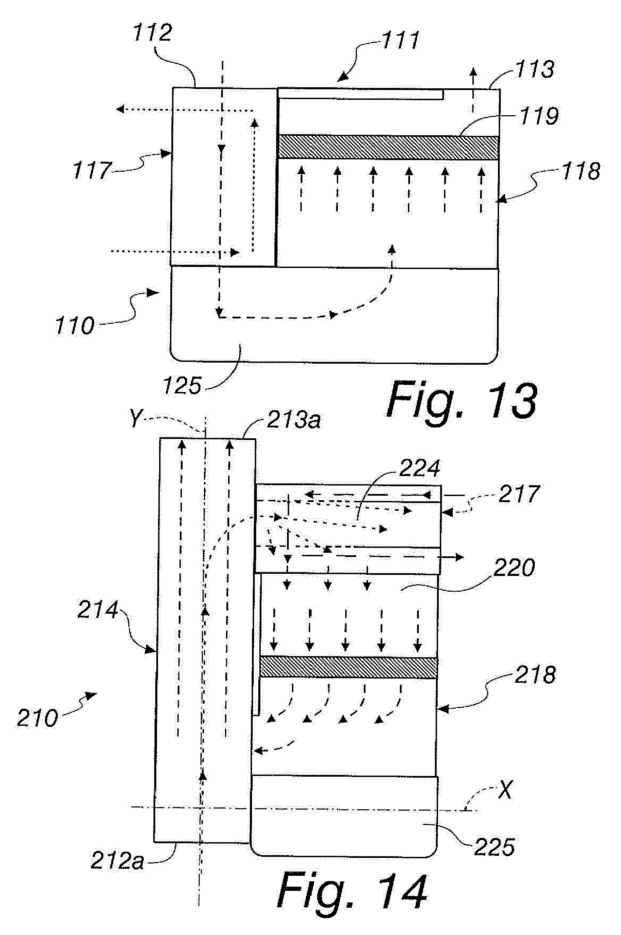

.In a second embodiment of the improved dryer according to the invention, indicated in figure 13 with number 110, the improved compressed gas dryer 110 does not have the gas/gas heat exchange means.

.This improved dryer 110 comprises, within the containment body 111 provided with an inlet 112 and an outlet 113,
- cooling means 117 for a gas entering through said inlet 112;
- a condensate separator 118 placed between said gas cooling means 117 and said outlet 113; this improved dryer 110 has the peculiarity that the condensate separator 118 is provided with the demister 119 set in a horizontal plane of arrangement in its configuration for use, as described above for the first embodiment of the improved dryer according to the invention 10.

.The inlets and outlets 112 and 113 are arranged for connection with any devices for the generation on outflow of saturated air or for overheating the air.

.The structural arrangement of the different parts of the improved dryer according to the invention as described above should obviously be understood as being a non-limiting example of the invention.

.In a third embodiment given as a further example, the improved dryer according to the invention, indicated in figure 14 with number 210, the gas/gas heat exchange means 214 essentially extend in a vertical direction Y in the configuration for use, with the inlet and outlet 212a and 213a arranged opposite to each other at the respective ends.

.Near the outlet 213a, the incoming gas is diverted toward the cooling means 217, that extend mainly in a horizontal direction X.

.The condensate separator 218, with its separation chamber 220, is arranged below the cooling chamber 224 of the cooling means 217.

.Below the separation chamber 220 is arranged a bottom 225 shaped so as to divert the flow of cooled gas toward the gas/gas heat exchange means 214.

.It has been effectively found that the invention achieves the predetermined objective and purposes.

.In particular, the invention made it possible to set up an improved dryer that is more efficient in terms of condensate separation, thanks to the peculiar horizontal position of the demister and the shape of the separation chamber, which allows the flow of gas to cross the demister in a substantially orthogonal direction at slower speeds in respect to prior-art compressed gas dryers.

.Moreover, the present invention made it possible to implement an improved dryer in which the condensate separator is achieved so as to minimize pressure drops, with resulting advantages for the overall efficiency of the dryer.

.Further, the present invention made it possible to adjust an improved dryer that can be made with more compact dimensions compared to an equivalent compressed gas dryer of known type, as well as being more economical from the point of view of energy consumption.

.The invention, in the way it is conceived, is susceptible of numerous modifications and variants, all embraced by the scope of the inventive concept; in addition, all the details can be substituted by other technically equivalent elements.

.In practice, the components and the materials used, as long as they are compatible with the specific use, as well as the dimensions or shapes, may be any depending on the requirements and the state of the art.

.Where the characteristics and the methods mentioned in any claims are followed by reference signs, such signs have been applied for the sole purpose of making the claims more intelligible, and consequently such reference signs have no limiting effect on the interpretation of each element identified by way of example by such reference signs.

## Claims

1. An improved compressed gas dryer (10) of the type comprising, within a containment body (11) provided with an inlet (12) and an outlet (13),
- cooling means (17) for a gas that enters through said inlet (12),
- a condensate separator (18), which is interposed between said gas cooling means (17) and said outlet (13),
said improved dryer (10) being **characterized in that** said condensate separator (10) is provided with a demister (19) that has a horizontal plane of arrangement in the configuration for use.

2. The improved compressed gas dryer (10) according to claim 1, **characterized in that** it comprises gas/gas heat exchange means (14) inside which there are
- an intake path (15) for the gas that enters from a corresponding inlet (12a) of said gas/gas heat exchange means (14) and is adapted to direct the incoming gas toward said inlet (12) that is open on the cooling means (17),
- a discharge path (16) for the gas that exits through said outlet (13) from said condensate separator (18) toward an outlet (13a) of said gas/gas heat exchange means (14).

3. The improved dryer according to one or more of the preceding claims, **characterized in that** said demister (19) is arranged within a separation chamber (20), said separation chamber (20) of the condensate separator (18) being contoured so that the flow of gas that exits from the cooling means (17) is directed against the demister (19) along a direction that is substantially perpendicular thereto.

4. The improved dryer according to one or more of the preceding claims, **characterized in that** it is provided with gas/gas heat exchange means (14) that are extended predominantly in a horizontal direction (X) in the configuration for use, with the inlet (12) and the outlet (13) arranged at a first end (21) thereof, while at the opposite end (22) there is a sharp bend (23) that is adapted to divert the flow of gas to the cooling means (17), which are extended predominantly along a vertical direction (Y) inside a cooling chamber (24).

5. The improved dryer according to one or more of the preceding claims, **characterized in that** said separation chamber (20) is arranged laterally adjacent to the cooling chamber (24) in the direction (X) and is extended predominantly in the same direction (X).

6. The improved dryer according to one or more of the preceding claims, **characterized in that** a curved bottom (25) is arranged below the cooling chamber (24) and the separation chamber (20) and is contoured to divert the stream of cooled gas toward the separation chamber (20).

7. The improved dryer according to one or more of the preceding claims, **characterized in that** the length in the direction (X) of the separation chamber (20) is such as to allow the stream of gas diverted by the curved bottom (25) to encounter the horizontal demister (19) along a direction that is substantially perpendicular thereto.

8. The improved dryer according to one or more of the preceding claims, **characterized in that** the shape of said curved bottom (25), the shape of the separation chamber (20) and the position and dimensions of said demister (19) are such that the demister (19) is crossed at right angles to its arrangement along its entire length.

9. The improved dryer according to one or more of the preceding claims, **characterized in that** the cross-section of the outlet (26) from the cooling chamber (24) is smaller than the cross-section of the inlet (27) of the separation chamber (20).

10. The improved dryer according to one or more of the preceding claims, **characterized in that** said curved bottom (25) has, in its lowest point in the configuration for use, a discharge sleeve (30) that is connected to a through hole (31) for the outflow of the liquid that has accumulated by gravity in the curved bottom (25).

11. The improved dryer according to one or more of the preceding claims, **characterized in that** in said curved bottom (25) there is also a perforated plate (32) that is preset to divert the flow of gas toward the separation chamber (20) and at the same time allow the passage of the liquid that descends from the demister (19) toward the discharge sleeve (30).

12. The improved dryer according to claims 1 to 3 and 6, **characterized in that** it has gas/gas heat exchange means (214) that are extended predominantly in a vertical direction (Y) in the configuration for use, with the inlet (212a) and the outlet (213a) arranged opposite at its ends, proximate to the outlet (213a) the incoming gas is diverted toward the cooling means (217), which are extended predominantly along a horizontal direction (X), the condensate separator (218), with its separation chamber (220), is arranged below the cooling chamber (224) of the cooling means (217).
